(19) Europäisches Patentamt
European Patent Office
Office européen des brevets

(11) Veröffentlichungsnummer : **0 455 595 A2**

# (12) EUROPÄISCHE PATENTANMELDUNG

(21) Anmeldenummer : **91810312.8**

(22) Anmeldetag : **25.04.91**

(51) Int. Cl.[5] : **C09B 1/20**, C09B 1/18, D06P 1/20

(30) Priorität : **04.05.90 CH 1509/90**

(43) Veröffentlichungstag der Anmeldung : **06.11.91 Patentblatt 91/45**

(84) Benannte Vertragsstaaten : **CH DE FR GB LI**

(71) Anmelder : **CIBA-GEIGY AG**
**Klybeckstrasse 141**
**CH-4002 Basel (CH)**

(72) Erfinder : **Adam, Jean-Marie, Dr.**
**Rue de Village Neuf 60 D**
**F-68300 Rosenau (FR)**
Erfinder : **Eichenberger, Thomas Dr.**
**Jungstrasse 17**
**CH-4056 Basel (CH)**

## (54) Anthrachinonfarbstoffe mit einer Silylgruppe.

(57) Die neuen Farbstoffe der im Anspruch 1 angegebenen Formel eignen sich insbesondere zum Färben von Textilmaterial aus Polypropylenfasern.

EP 0 455 595 A2

Die vorliegende Erfindung betrifft neue Anthrachinonfarbstoffe, Verfahren zu deren Herstellung sowie deren Verwendung zum Färben von hydrophobem Textilmaterial.

Gegenstand der Erfindung sind Farbstoffe der Formel

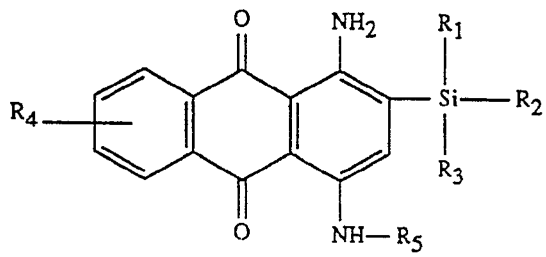

(1)

worin

$R_1$, $R_2$ und $R_3$ unabhängig voneinander je gegebenenfalls substituiertes Alkyl oder Aryl,

$R_4$ Wasserstoff, Hydroxy, Nitro, Amino, Halogen oder gegebenenfalls substituiertes Alkyl, und

$R_5$ gegebenenfalls substituiertes Alkyl oder Aryl oder einen Rest

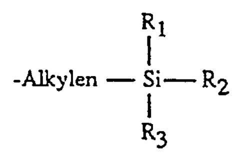

bedeuten.

Unter Alkyl sind in dieser Anmeldung generell geradkettige oder verzweigte oder cyclische Alkylgruppen zu verstehen, z.B. solche mit 1 bis 25 Kohlenstoffatomen. Es handelt sich z.B. um Methyl, Ethyl, Propyl, i-Propyl, Butyl, i-Butyl, tert.-Butyl, Amyl, tert.-Amyl (1,1-Dimethylpropyl), 1,1,3,3-Tetramethylbutyl, Hexyl, 1-Methylpentyl, Neopentyl, 1-, 2- oder 3-Methylhexyl, Heptyl, n-Octyl, tert. Octyl, 2-Ethylhexyl, n-Nonyl, Isononyl, Decyl, n-Dodecyl, n-Hexadecyl, n-Octadecyl, n-Eicosyl, n-Pentacosyl, Cyclopentyl, Cyclohexyl, Methylcyclohexyl, Trimethylcyclohexyl sowie die dazugehörenden Isomeren.

Diese Alkylreste können substituiert sein, z.B. durch Halogen, Cyano oder Phenyl.

Geeignete substituierte Alkylreste sind z.B. Chlorethyl, Cyanethyl oder Benzyl.

Unter Halogen ist in dieser Anmeldung generell fluor, Chlor oder Brom zu verstehen.

Bei $R_5$ bedeutet Alkylen geradkettiges oder verzweigtes Alkylen mit vorzugsweise 2 bis 8 C-Atomen, welches auch substituiert sein kann. In Frage kommen z.B. Ethylen, 1,3-Propylen, 1,4-Butylen, 1,5-Pentylen, 1,6-Hexylen, 1,2-Propylen, 1,2-Butylen oder 2-Chlor-1,3-propylen. Bevorzugt sind Ethylen, 1,3-Propylen und 1,4-Butylen.

Aryl bedeutet in dieser Anmeldung generell einen aromatischen Rest, welcher auch heterocyclisch sein kann. Vorzugsweise handelt es sich jedoch um Naphthyl und insbesondere um Phenyl.

Die Arylreste können weiter substituiert sein, z.B. durch Alkyl, Alkoxy, Halogen oder Acylamino. Vorzugsweise handelt es sich bei Aryl um unsubstituiertes Phenyl oder um Phenyl, welches substituiert ist durch $C_1$-$C_4$-Alkyl, $C_1$-$C_4$-Alkoxy oder $C_1$-$C_4$-Alkanoylamino.

$R_1$, $R_2$ und $R_3$ bedeuten unabhängig voneinander vorzugsweise je $C_1$-$C_{20}$-Alkyl, Phenyl oder Triphenylmethyl. Besonders bevorzugt sind solche Verbindungen der Formel (1), bei denen $R_1$, $R_2$ und $R_3$ unabhängig voneinander je $C_1$-$C_6$-Alkyl oder Phenyl bedeuten.

In bevorzugten Farbstoffen der Formel (1) bedeutet $R_5$ $C_1$-$C_{10}$-Alkyl, Cyclohexyl, welches durch 1 bis 3 Methyl substituiert sein kann, Phenyl, Phenyl, substituiert durch Methyl, Methoxy oder Acetylamino, oder

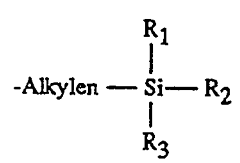

,

wobei Alkylen geradkettiges $C_2$-bis $C_4$-Alkylen bedeutet.

$R_4$ bedeutet vorzugsweise Wasserstoff.

Wegen ihrer besonders guten färberischen Eigenschaften sind solche Farbstoffe der Formel (1) besonders bevorzugt, bei denen $R_1$, $R_2$ und $R_3$ unabhängig voneinander je $C_1$-$C_{20}$-Alkyl, Phenyl oder Triphenylmethyl, $R_4$ Wasserstoff und $R_5$ $C_1$-$C_{10}$-Alkyl, Cyclohexyl, welches durch 1 bis 3 Methyl substituiert sein kann, oder Phenyl, welches durch Methyl, Methoxy oder Acetylamino substituiert sein kann, bedeutet.

Die Farbstoffe der Formel (1) werden z.B. hergestellt, indem man eine Verbindung der Formel (2)

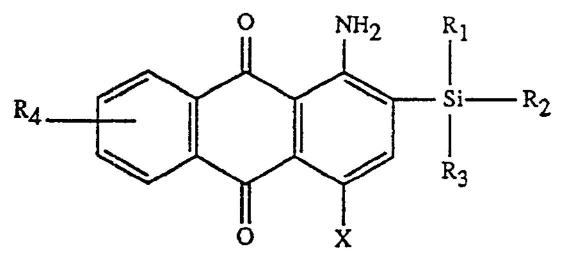

(2)

mit einem Amin der Formel

$$H_2N\text{-}R_5 \qquad (3)$$

umsetzt, wobei $R_1$, $R_2$, $R_3$, $R_4$ und $R_5$ die unter der Formel (1) angegebene Bedeutung aufweisen und X Chlor oder Brom bedeutet.

Die Umsetzung der Verbindung der Formel (2) mit dem Amin der Formel (3) geschieht z.B. unter solchen Bedingungen, wie sie von der Umsetzung von Halogenanthrachinon-Verbindungen mit Aminen bekannt sind. Man erhitzt z.B. eine Verbindung der Formel (2) mit einem Überschuß an Amin der Formel (3), gegebenenfalls in einem inerten Lösungsmittel, auf erhöhte Temperatur, z.B. zwischen 50 und 150°C. Vorzugsweise setzt man einen Katalysator, wie z.B. ein Gemisch aus Cu und CuCl, sowie einen Säureakzeptor, wie z.B. Natrium- oder Kaliumacetat oder -carbonat zu. Nach Beendigung der Reaktion wird auf übliche Art der Farbstoff der Formel (1) isoliert.

Die Verbindungen der Formel (2) sind neu und stellen einen weiteren Gegenstand der vorliegenden Erfindung dar.

Sie werden z.B. erhalten, indem man eine Verbindung der Formel

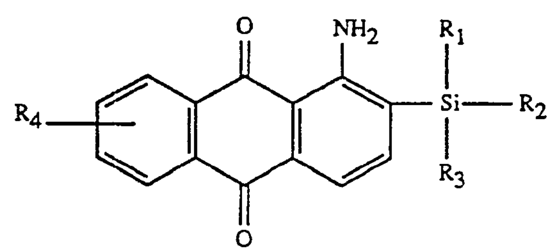

(4)

wobei $R_1$, $R_2$, $R_3$ und $R_4$ die unter der Formel (1) angegebene Bedeutung aufweisen, chloriert oder bromiert. Die Reaktionsbedingungen entsprechen dabei den für die Chlorierung oder Bromierung von Aminoanthrachinonen bekannten Bedingungen. Beispielsweise löst man eine Verbindung der Formel (4) in einem inerten Lösungsmittel und leitet bei erhöhter Temperatur, z.B. zwischen 50 und 100°C, Chlor ein bzw. tropft Brom, gegebenenfalls in einem inerten Lösungsmittel gelöst, zu. Es ist vorteilhaft in Gegenwart eines Säureakzeptors, wie z.B. Natrium- oder Kaliumacetat oder -carbonat oder Pyridin, zu arbeiten. Nach Beendigung der Reaktion wird auf übliche Weise aufgearbeitet.

Die Verbindungen der Formel (4)

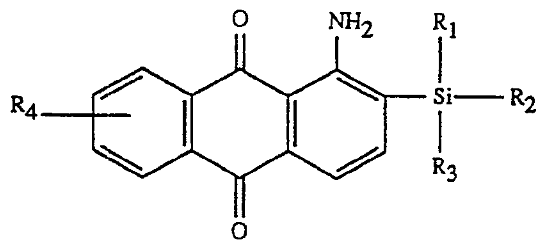

(4)

worin $R_1$, $R_2$, $R_3$ und $R_4$ die unter der Formel (1) angegebene Bedeutung aufweisen, wobei jedoch einer der Substituenten $R_1$, $R_2$ oder $R_3$ eine andere Bedeutung als i-Propyl aufweist, falls $R_4$ Wasserstoff ist, sind ebenfalls neu und stellen einen weiteren Gegenstand der vorliegenden Erfindung dar.

Man erhält sie z.B., indem man ein Vinylketenimin der Formel

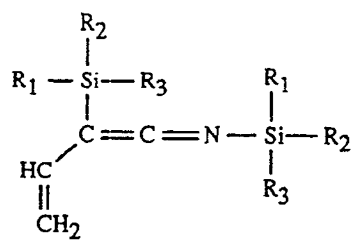

(5)

mit einem Naphthochinon der Formel

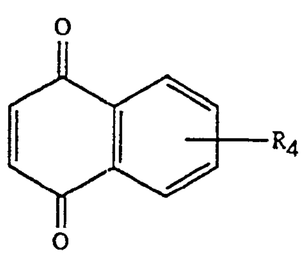

(6)

umsetzt, wobei $R_1$, $R_2$, $R_3$ und $R_4$ die unter der Formel (1) angegebene Bedeutung aufweisen.

Die Verbindungen der Formel (5) sind bekannt oder können nach bekannten Methoden hergestellt werden, beispielsweise nach der in Tetrahedron Letters, Vol 28, No 4, 397-400 (1987) beschriebenen Methode.

Ebenfalls bekannt sind die Naphthochinone der Formel (6).

Die Umsetzung der Verbindung der Formel (5) mit dem Naphthochinon der Formel (6) erfolgt z.B. in einem inerten Lösungsmittel bei einer Temperatur zwischen 0 und 60°C, vorzugsweise bei Raumtemperatur. Anschließend gibt man vorteilhafterweise eine Anschlämmung eines Alkalifluorides in einem aliphatischen Alkohol, vorzugsweise KF in Methanol, zu und rührt einige Zeit, z.B. 20 bis 100 h in Gegenwart von Luftsauerstoff. Danach werden die anorganischen Salze entfernt und die Verbindung der Formel (4) isoliert.

Die erfundungsgemäßen Verbindungen der Formel (1) können als Dispersionsfarbstoffe zum Färben und Bedrucken von halbsynthetischen und insbesondere synthetischen hydrophoben Fasermaterialen, vor allem Textilmaterialien, verwendet werden. Textilmaterialien aus Mischgeweben, die derartige halbsynthetische bzw. synthetische hydrophobe Textilmaterialien enthalten, können ebenfalls mit Hilfe der erfindungsgemäßen Verbindungen gefärbt oder bedruckt werden.

Als halbsynthetische Textilmaterialien kommen vor allem Cellulose-2 1/2-Acetat und Cellulosetriacetat in Frage.

Synthetische hydrophobe Textilmaterialien bestehen z.B. aus linearen, aromatischen Polyestern, beispielsweise solchen aus Terephthalsäure und Glykolen, besonders Ethylenglykol oder Kondensationsprodukten aus Terephthalsäure und 1,4-Bis-(hydroxymethyl)-cyclohexan; aus Polycarbonaten, z.B. solchen aus α,α-Dimethyl-4,4'-dihydroxy-diphenylmethan und Phosgen, aus Fasern auf Polyvinylchlorid- sowie Polyamid-Basis.

Besonders geeignet sind die erfindungsgemäßen Farbstoffe jedoch zum Färben von Textülmaterial aus

Polypropylen oder nickelmodifiziertem Polypropylen.

Die Applikation der erfindungsgemäßen Farbstoffe auf die Textilmaterialien erfolgt nach bekannten Färbeverfahren. Beispielsweise färbt man Polypropylenmaterialien im Ausziehverfahren aus wäßriger Dispersion in Gegenwart von üblichen anionischenoder nicht-ionischen Dispergiermitteln bei Temperaturen von etwa 100°C.

Die erfindungsgemäßen Dispersionsfarbstoffe eignen sind auch zum Färben nach dem Thermosol-Verfahren.

Das genannte Textilmaterial kann dabei in den verschiedensten Verarbeitungsformen vorliegen, wie z.B. als Faser, Faden oder Vlies, als Gewebe oder Gewirke.

Es ist vorteilhaft, die erfindungsgemäßen Dispersionsfarbstoffe vor ihrer Verwendung in ein Farbstoffpräparat zu überführen. Hierzu wird der Farbstoff vermahlen, so daß seine Teilchengröße im Mittel zwischen 0,01 und 10 Mikron beträgt. Das Vermahlen kann in Gegenwart von Dispergiermitteln erfolgen. Beispielsweise wird der getrocknete Farbstoff mit einem Dispergiermittel gemahlen oder in Pastenform mit einem Dispergiermittel geknetet und hierauf im Vakuum oder durch Zerstäuben getrocknet. Mit den so erhaltenen Präparaten kann man nach Zugabe von Wasser färben und bedrucken.

Beim Bedrucken wird man die üblichen Verdickungsmittel verwenden, z.B. modifizierte oder nichtmodifizierte natürliche Produkte, beispielsweise Alginate, British-Gummi, Gummi arabicum, Kristallgummi, Johannisbrotkernmehl, Tragant, Carboxymethylcellulose, Hydroxyethylcellulose, Stärke oder synthetische Produkte, beispielsweise Polyacrylamide, Polyacrylsäure oder deren Copolymere oder Polyvinylalkohole.

Die erfindungsgemäßen Dispersionsfarbstoffe verleihen den genannten Materialien, vor allem dem Polypropylenmaterial, egale blaue Farbtöne von sehr guten Gebrauchs-Echtheiten, wie vor allem guter Lichtechtheit, Thermofuxier-, Plissier-, Chlor- und Naßechtheit wie Wasser-, Schweiß- und Waschechtheit; die Ausfärbungen sind ferner gekennzeichnet durch eine gute pH-Stabilität und sehr gute Reibechtheit. Es werden außerdem sehr farbstarke Färbungen erzielt.

Die erfindungsgemäßen Farbstoffe können auch gut verwendet werden zur Herstellung von Mischnuancen zusammen mit anderen Farbstoffen. Selbstverständlich können auch Mischungen der erfindungsgemäßen Farbstoffe untereinander verwendet werden.

Es empfiehlt sich, die Färbungen und Drucke einem gründlichen Spülen mit kaltem und heißem Wasser, gegebenenfalls unter Zusatz eines dispergierend wirkenden und die Diffusion der nicht fixierten Anteile fördernden Mittels zu unterwerfen.

In den folgenden Beispielen stehen Teile für Gewichtsteile und % für Gewichtsprozent. Die Temperaturen sind Celsiusgrade.

Beispiel 1:

A) 41 Teile des Silylvinylketenimins der Formel

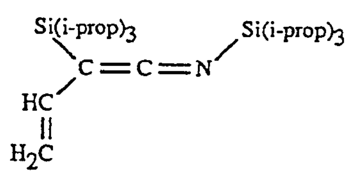

hergestellt gemäß E. DIFFERDING et al., Tetrahedron Letters 1987, 397, werden mit 17 Teilen Naphthochinon in 600 Teilen Methylenchlorid 17 Stunden gerührt. Man gibt 400 Teile Methanol sowie 24 Teile Kaliumfluorid zu und rührt weitere 60 Stunden kräftig, um die vollständige Oxidation der Dihydroanthrachinon- zur Anthrachinonstufe mittels Luftsauerstoff zu bewirken. Danach wird die Reaktionslösung zur Entfernung der anorganischen Salze zweimal mit je 600 Teilen Wasser ausgeschüttelt; die organische Phase wird mit 600 Teilen Methanol versetzt, auf die Hälfte des ursprünglichen Volumens eingeengt und 20 Stunden bei Raumtemperatur stehengelassen. Der Niederschlag wird abfiltriert und bei 60°C im Vakuum getrocknet. Man erhält 34 Teile der Verbindung der Formel

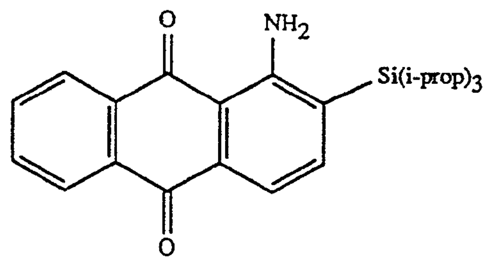

in Form von roten Kristallen.

B) 92 Teile der vorstehend aufgeführten Verbindung und 40 Teile wasserfreies Natriumacetat werden in 7500 Teile Methanol gegeben und das Gemisch unter Rühren auf 60°C erwärmt. Man läßt innert 15 Minuten eine frisch bereitete Lösung von 41 Teilen Brom in 1800 Teilen Methanol einlaufen und rührt noch 25 Minuten nach, wobei die Temperatur des Reaktionsgemischs stets bei 60°C gehalten wird. Bei derselben Temperatur wird anschließend innert 5 Minuten eine zweite Portion Brom (9 Teile Brom in 400 Teilen Methanol) zugegeben und 20 Minuten bei 60°C gerührt. Danach läßt man langsam ohne Rühren auf Raumtemperatur erkalten. 20 Stunden nach Beenden der Reaktion wird der entstandene Niederschlag abfiltriert und bei 60°C getrocknet. Man erhält 61 Teile der Verbindung der Formel

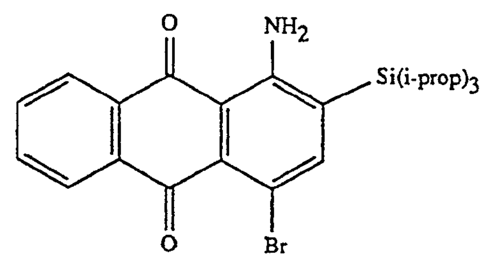

in Form von hellroten Kristallen.

Das oben erhaltene Filtrat wird auf ein Viertel des ursprünglichen Volumens eingeengt und 15 Stunden bei Raumtemperatur stehengelassen. Der Niederschlag wird abgesaugt und aus Methanol umkristallisiert, wobei nochmals 20 Teile Produkt der oben erwähnten Formel gewonnen werden.

Auf analoge Art und Weise können folgende Zwischenprodukte hergestellt werden:

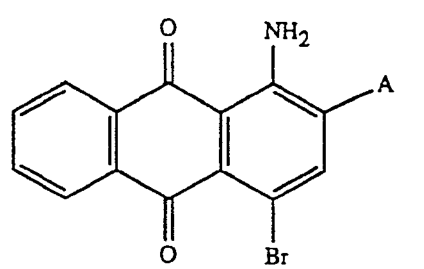

| Beispiel | A |
|---|---|
| 2 | 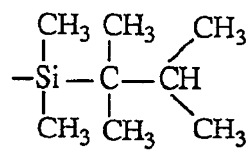 |
| 3 | 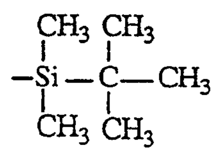 |
| 4 | 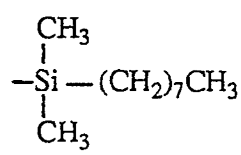 |
| 5 | 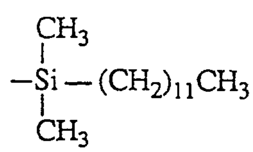 |
| 6 | 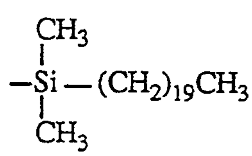 |
| 7 | 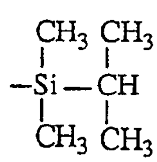 |
| 8 | 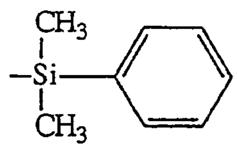 |

| Beispiel | A |
|---|---|
| 9 | 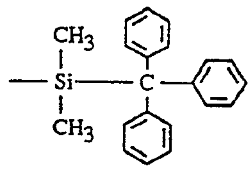 |
| 10 | 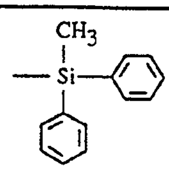 |
| 11 | 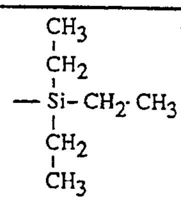 |
| 12 | 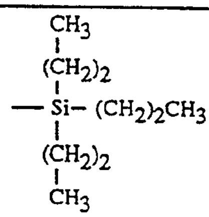 |
| 13 | 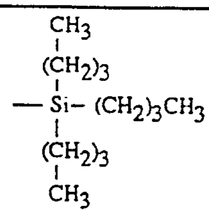 |
| 14 | 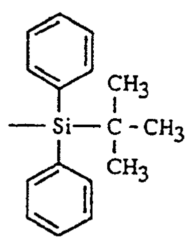 |
| 15 | 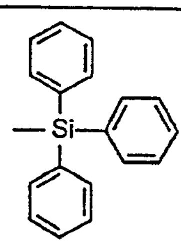 |

Beispiel 16:

50 Teile des nach Beispiel 1 hergestellten Zwischenprodukts werden in 400 Teilen n-Butylamin mit 1 Teil

eines 1:1-Gemischs von Cu/CuCl und 13 Teilen wasserfreiem Kaliumacetat verrührt und zum Sieden erhitzt. Man rührt 20 Stunden unter Rückfluß, läßt das Reaktionsgemisch auf Raumtemperatur abkühlen, rührt 1000 Teile Methylenchlorid ein und filtriert von unlöslichen Bestandteilen ab. Das Filtrat wird zur Trockne eingeengt und der Rückstand in einem Gemisch Methylenchlorid/Methanol gereinigt. Man erhält 42 Teile des Farbstoffs der Formel:

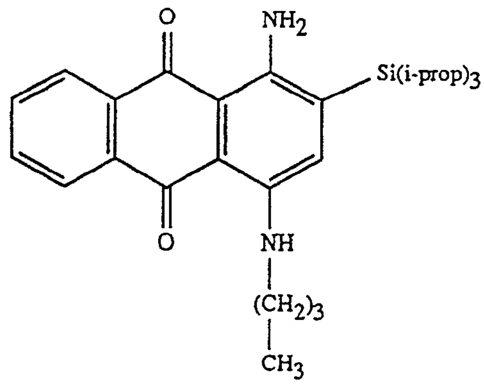

Er färbt unmodifuziertes sowie nickelmodifiziertes Polypropylen in kräftigen, brillanten blauen Tönen.

Beispiele 17-54

Ersetzt man im obigen Beispiel 16 die angegebene Silylverbindung durch die in Spalte 2 der folgenden Tabelle aufgeführte Silylverbindung und das n-Butylamin durch das in Spalte 3 aufgeführte Amin und verfährt man wie im Beispiel 16, so erhält man analoge Farbstoffe, welche Textilmaterial aus Polypropylen in der in Spalte 4 angegebenen Nuance färben.

| Beispiel | 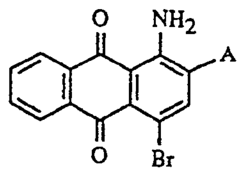 | B-$NH_2$ | Nuance auf Polypropylen |
|---|---|---|---|
| | A | B | |
| 17 | -Si(i-prop)$_3$ | -$CH_2$-$CH_3$ | blau |
| 18 | -Si(i-prop)$_3$ | -$CH_2$ $CH_2CH_3$ | blau |
| 19 | -Si(i-prop)$_3$ | H<br>-C -$CH_3$<br>$CH_3$ | blau |
| 20 | -Si(i-prop)$_3$ | H<br>-C -$CH_2CH_3$<br>$CH_3$ | blau |
| 21 | -Si(i-prop)$_3$ | -$(CH_2)_4CH_3$ | blau |
| 22 | -Si(i-prop)$_3$ | $CH_3$<br>-C-$(CH_2)_2CH_3$<br>H | blau |
| 23 | -Si(i-prop)$_3$ | -$(CH_2)_5CH_3$ | blau |

| Beispiel | A | B | Nuance auf Polypropylen |
|---|---|---|---|
| 24 | $-Si(i\text{-}prop)_3$ | 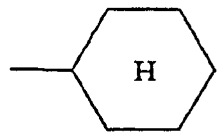 | blau |
| 25 | $-Si(i\text{-}prop)_3$ | $-(CH_2)_6CH_3$ | blau |
| 26 | $-Si(i\text{-}prop)_3$ | $-(CH_2)_7CH_3$ | blau |
| 27 | $-Si(i\text{-}prop)_3$ | $-(CH_2)_8CH_3$ | blau |
| 28 | $-Si(i\text{-}prop)_3$ | 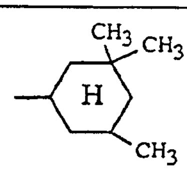 | blau |
| 29 | $-Si(i\text{-}prop)_3$ | $-(CH_2)_9CH_3$ | blau |
| 30 | $-Si(i\text{-}prop)_3$ | 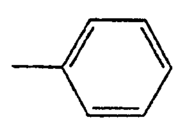 | grünstichig blau |
| 31 | $-Si(i\text{-}prop)_3$ | 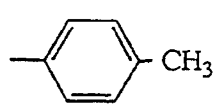 | grünstichig blau |

| Beispiel | A | B | Nuance auf Polypropylen |
|---|---|---|---|
| 32 | -Si(i-prop)$_3$ | 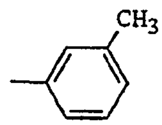 | grünstichig blau |
| 33 | -Si(i-prop)$_3$ | 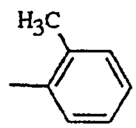 | grünstichig blau |
| 34 | -Si(i-prop)$_3$ | 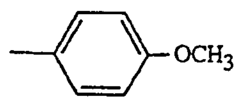 | grünstichig blau |
| 35 | -Si(i-prop)$_3$ | 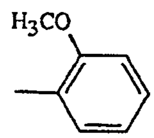 | grünstichig blau |
| 36 | -Si(i-prop)$_3$ | 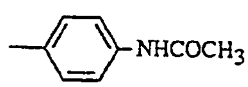 | grünstichig blau |
| 37 | -Si(i-prop)$_3$ | 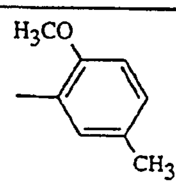 | grünstichig blau |
| 38 | -Si(i-prop)$_3$ | 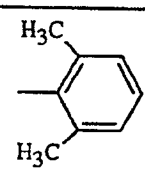 | grünstichig blau |

| Beispiel | A | B | Nuance auf Polypropylen |
|---|---|---|---|
| 39 | -Si(i-prop)$_3$ | 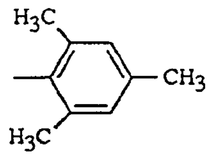 | grünstichig blau |
| 40 | 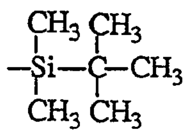 | 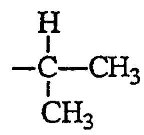 | blau |
| 41 | 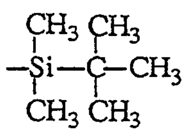 | $-(CH_2)_3CH_3$ | blau |
| 42 | 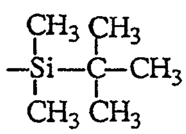 | 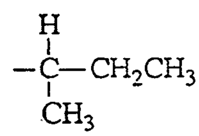 | blau |
| 43 | 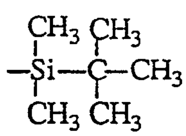 | 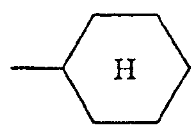 | blau |
| 44 | 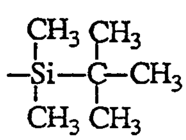 | 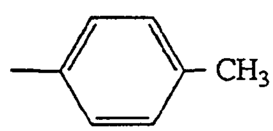 | grünstichig blau |
| 45 | 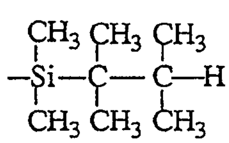 | 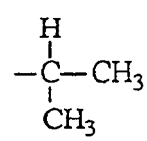 | blau |
| 46 | 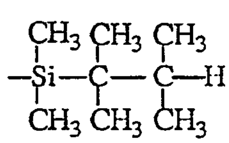 | $-(CH_2)_3CH_3$ | blau |

| Beispiel | A | B | Nuance auf Polypropylen |
|---|---|---|---|
| 47 | 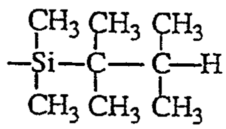 | 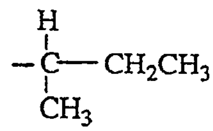 | blau |
| 48 | 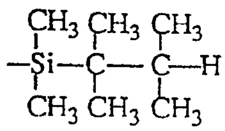 | 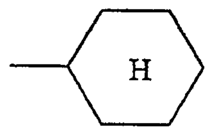 | blau |
| 49 | 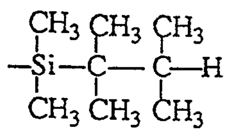 | 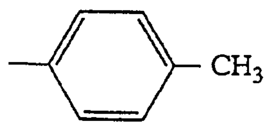 | grünstichig blau |
| 50 | 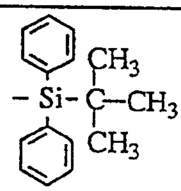 | 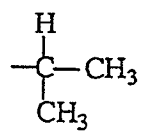 | blau |
| 51 | 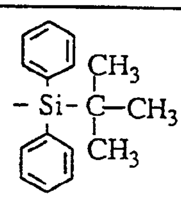 | $-(CH_2)_3CH_3$ | blau |
| 52 | 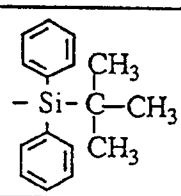 | 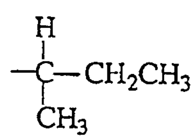 | blau |
| 53 | 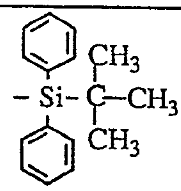 | 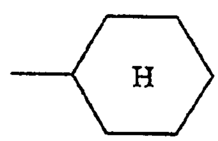 | blau |
| 54 | 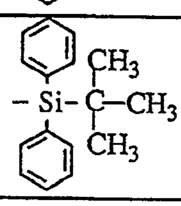 | 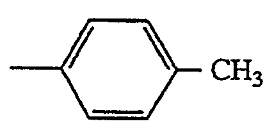 | grünstichig blau |

| Beispiel | A | B | Nuance auf Polypropylen |
|---|---|---|---|
| 55 | -Si(i-prop)$_3$ | 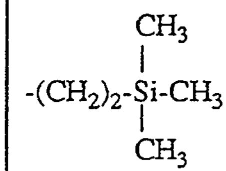 | blau |
| 56 | 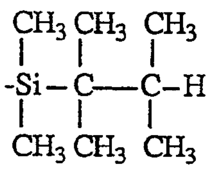 | 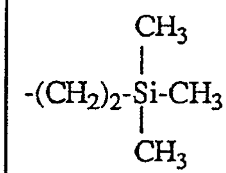 | blau |
| 57 | 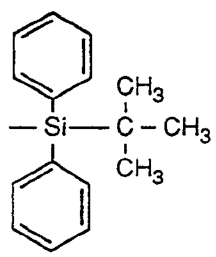 | 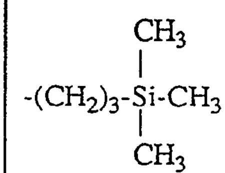 | blau |

Beispiel 58:

1 g des im Beispiel 16 beschriebenen Farbstoffs wird zusammen mit 17 g Wasser und 2 g eines handelsüblichen Dispergators vom Typ Dinaphthylmethandisulfonat in einer Sandmühle gemahlen und in eine 5%ige wäßrige Dispersion überführt.

Mit dieser Formulierung wird im Ausziehverfahren 1 Stunde bei 100°C und pH 3,5-4 (eingestellt mit Ameisensäure 85%) eine 1%ige Färbung (bezogen auf Pigment und Substrat) auf Polypropylengewebe erstellt. Die so erzielte blaue Färbung weist sehr gute Gebrauchsechtheiten auf.

Dieselben guten Echtheiten lassen sich erzielen, wenn mit der vorstehend beschriebenen Formulierung Polypropylengewebe im analogen Ausziehverfahren bei pH 10-11 (eingestellt mit 1 g/l Soda calc.) gefärbt wird.

## Patentansprüche

1. Farbstoffe der Formel

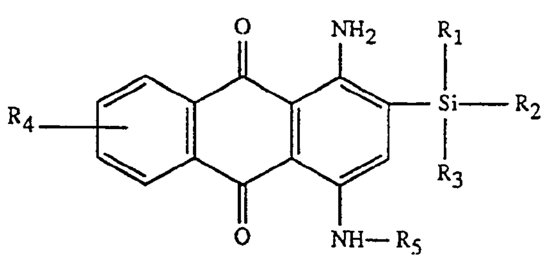

(1)

worin

$R_1$, $R_2$ und $R_3$ unabhängig voneinander je gegebenenfalls substituiertes Alkyl oder Aryl,
$R_4$ Wasserstoff, Hydroxy, Nitro, Amino, Halogen oder gegebenenfalls substituiertes Alkyl, und
$R_5$ gegebenenfalls substituiertes Alkyl oder Aryl oder einen Rest

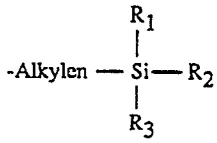

bedeuten.

2. Farbstoffe gemäß Anspruch 1, worin $R_1$, $R_2$ und $R_3$ unabhängig voneinander je $C_1$-$C_{20}$-Alkyl, Phenyl oder Triphenylmethyl, insbesondere $C_1$-$C_6$-Alkyl oder Phenyl bedeuten.

3. Farbstoffe gemäß einem der Ansprüche 1 oder 2, worin $R_5$ $C_1$-$C_{10}$-Alkyl, Cyclohexyl, welches durch 1 bis 3 Methyl substituiert sein kann, Phenyl, Phenyl, substituiert durch Methyl, Methoxy oder Acetylamino, oder

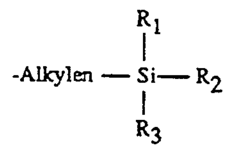

bedeutet, worin Alkylen geradkettiges $C_2$- bis $C_4$-Alkylen bedeutet.

4. Farbstoffe gemäß einem der Ansprüche 1 bis 3, worin $R_4$ Wasserstoff bedeutet.

5. Farbstoffe gemäß einem der Ansprüche 1 bis 4, worin $R_1$, $R_2$ und $R_3$ unabhängig voneinander je $C_1$-$C_{20}$-Alkyl, Phenyl oder Triphenylmethyl, $R_4$ Wasserstoff und $R_5$ $C_1$-$C_{10}$-Alkyl, Cyclohexyl, welches durch 1 bis 3 Methyl substituiert sein kann, oder Phenyl, welches durch Methyl, Methoxy oder Acetylamino substituiert sein kann, bedeutet.

6. Verfahren zur Herstellung der Farbstoffe der Formel ( 1 ) gemäß Anspruch 1, dadurch gekennzeichnet, daß man eine Verbindung der Formel (2)

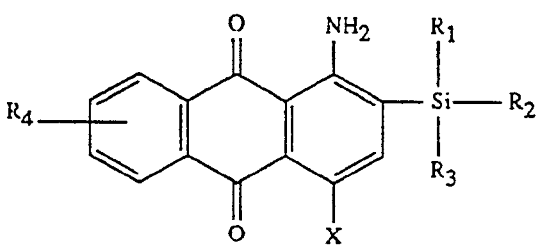

(2)

mit einem Amin der Formel

$H_2N$-$R_5$ (3)

umsetzt, wobei $R_1$, $R_2$, $R_3$, $R_4$ und $R_5$ die unter der Formel (1) angegebene Bedeutung aufweisen und X Chlor oder Brom bedeutet.

7. Verbindungen der Formel

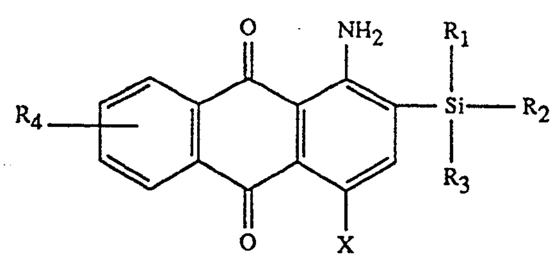

(2)

worin

$R_1$, $R_2$, $R_3$ und $R_5$ unabhängig voneinander je gegebenenfalls substituiertes Alkyl oder Aryl, und
$R_4$ Wasserstoff, Hydroxy, Nitro, Amino, Halogen oder gegebenenfalls substituiertes Alkyl und
X Chlor oder Brom bedeuten.

**8.** Verfahren zur Herstellung der Verbindungen der Formel (2) gemäß Anspruch 7, dadurch gekennzeichnet, daß man eine Verbindung der Formel

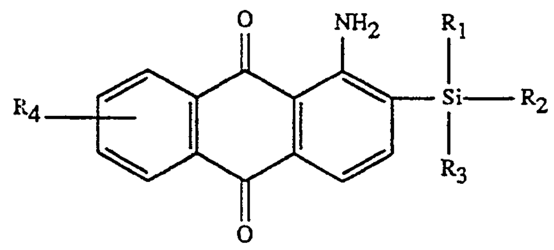

(4)

wobei $R_1$, $R_2$, $R_3$ und $R_4$ die unter der Formel (2) angegebene Bedeutung aufweisen, chloriert oder bromiert.

**9.** Verbindungen der Formel

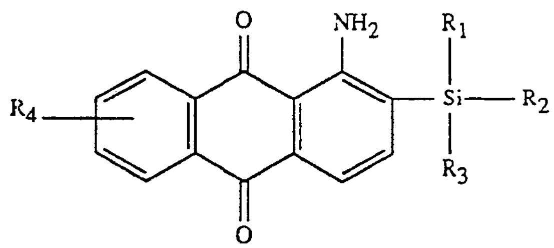

(4)

worin

$R_1$, $R_2$ und $R_3$ unabhängig voneinander je gegebenenfalls substituiertes Alkyl oder Aryl, und
$R_4$ Wasserstoff, Hydroxy, Nitro, Amino, Halogen oder gegebenenfalls substituiertes Alkyl bedeuten,
wobei jedoch einer der Substituenten $R_1$, $R_2$ oder $R_3$ eine andere Bedeutung als i-Propyl aufweist, falls $R_4$ Wasserstoff ist.

**10.** Verfahren zur Herstellung der Verbindungen der Formel (4) gemäß Anspruch 9, dadurch gekennzeichnet, daß man ein Vinylketenimin der Formel

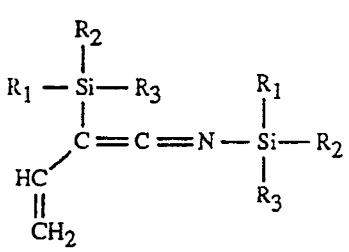

(5)

mit einem Naphthochinon der Formel

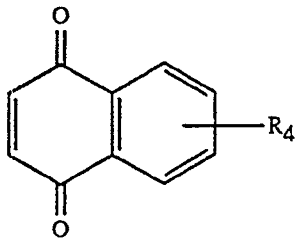

(6)

umsetzt, wobei $R_1$, $R_2$, $R_3$ und $R_4$ die unter der Formel (4) angegebene Bedeutung aufweisen

**11.** Verwendung der Dispersionsfarbstoffe gemäß Anspruch 1 zum Färben oder Bedrucken von halbsynthetischem oder synthetischem hydrophobem Fasermaterial, insbesondere Textilmaterial.

**12.** Verwendung nach Anspruch 10 zum Färben oder Bedrucken von Textilmaterial aus Polypropylenfäsem.

**13.** Verfahren zum Färben oder Bedrucken von halbsynthetischem oder synthetischem hydrophobem Fasermaterial, insbesondere Textilmaterial, dadurch gekennzeichnet, daß man eine oder mehrere der im Anspruch 1 defunierten Verbindungen auf das genannte Material aufbringt oder diesem einverleibt.

**14.** Verfahren nach Anspruch 13, worin das hydrophobe Fasermaterial, vorzugsweise Textilmaterial, aus Polypropylenfasem besteht.

**15.** Das gemäß Anspruch 13 oder 14 gefärbte oder bedruckte Material.